# FASCICULE DE BREVET EUROPEEN

(11) **EP 2 859 306 B1**
(45) Date de publication et mention de la délivrance du brevet: **04.01.2017**
(21) Numéro de dépôt: 13727204.3
(22) Date de dépôt: 07.06.2013
(51) Int. Cl.: E06B 9/72, G01C 9/00, E06B 9/68, E06B 9/64

(54) **PROCEDE DE COMMANDE D'UNE INTALLATION EQUIPEE D'UN ACTIONNEUR ROTATIF ET DISPOSITIF DE COMMANDE ASSOCIE**
VERFAHREN ZUM STEUERN EINER INSTALLATION DIE MIT EINEM DREHANTRIEB AUSGESTATTET IST UND ZUGEHÖRIGE STEUERVORRICHTUNG
PROCEDURE OF COMMANDING AN INSTALLATION EQUIPPED WITH A ROTARY ACTUATOR AND DEVICE OF COMMANDING ASSOCIATED THERETO

(30) Priorité: 07.06.2012 FR 1255346; 24.10.2012 FR 1260140
(43) Date de publication de la demande: 15.04.2015
(73) Titulaire: Somfy SAS, 74300 Cluses (FR)
(72) Inventeur: BRUNO, Serge, F-74460 Marnaz (FR); LEMAITRE, Sébastien, F-74300 Cluses (FR)
(74) Mandataire: Bugnion Genève
(86) Numéro de dépôt international: PCT/EP2013/061754
(87) Numéro de publication internationale: WO 2013/182663

(56) Documents cités:
- EP-A2- 2 216 478
- WO-A1-2012/085252
- DE-A1-102010 033 275
- DE-U1- 20 000 682

## Description

La présente demande revendique la priorité de la demande de brevet français FR 12/55346, déposée le 7 juin 2012 et FR 12/60140, déposée le 24 octobre 2012, le contenu de ces deux demandes étant intégré ici par référence.

### DOMAINE TECHNIQUE DE L'INVENTION

L'invention se rapporte à la commande d'une installation, notamment d'une installation domotique, équipée d'au moins un actionneur rotatif comportant une première partie solidaire d'un tube d'enroulement d'une toile d'écran mobile, et une deuxième partie solidaire d'un organe d'équilibrage, la première partie tournant par rapport à la deuxième partie autour d'un axe géométrique de référence du tube d'enroulement pour l'enroulement et le déroulement de la toile, le tube étant suspendu à la toile de sorte que l'axe géométrique de référence se déplace verticalement, perpendiculairement à lui-même, entre une position haute et une position basse lors de l'enroulement et du déroulement de la toile.

### ÉTAT DE LA TECHNIQUE ANTÉRIEURE

Dans le document WO 12/085 252 est décrite une installation du type précédent. L'actionneur est logé dans le tube d'enroulement et se déplace avec ce dernier, à la différence d'installations plus courantes dont l'actionneur comporte un carter qui reste fixe dans un repère galiléen lorsque l'écran se déroule. Les solutions habituellement retenues pour commander les actionneurs à carter fixe, et notamment pour détecter l'état de l'installation aux fins de son pilotage, ne sont pas aisément transposables à l'installation décrite dans ce document.

Dans le document DE 200 00 682 U est décrit un capteur d'accélération ou d'inclinaison pour détecter les mouvements ou la position d'un volet roulant.

### EXPOSÉ DE L'INVENTION

L'invention vise à remédier aux inconvénients de l'état de la technique et à proposer des moyens permettant de faciliter la commande d'une installation telle que définie haut.

Suivant un premier aspect de l'invention, celle-ci a trait à un procédé de commande d'une installation, et notamment d'une installation domotique, équipée d'au moins un premier actionneur rotatif comportant une première partie solidaire d'un tube d'enroulement d'une toile d'un premier écran mobile associé au premier actionneur, et une deuxième partie solidaire d'un organe d'équilibrage, la première partie tournant par rapport à la deuxième partie autour d'un axe géométrique de référence du tube d'enroulement pour l'enroulement et le déroulement de la toile, le tube étant suspendu à la toile de sorte que l'axe géométrique de référence se déplace perpendiculairement à lui-même entre une position haute et une position basse lors de l'enroulement et du déroulement de la toile, procédé suivant lequel on utilise un signal en provenance d'un ou plusieurs capteurs inertiels fixes par rapport à l'organe d'équilibrage pour commander l'actionneur rotatif. La première partie est de préférence un arbre de sortie de l'actionneur, tandis que la deuxième partie comprend un carter tubulaire, celui-ci étant obturé par un flasque de l'organe d'équilibrage.

On profite ainsi des positionnements ou mouvements caractéristiques de l'organe d'équilibrage, détectés par le ou les capteurs inertiels pour obtenir des informations utiles à la commande de l'installation, soit au moment de son paramétrage, soit en temps réel lors des manoeuvres. Comme il sera développé en détail plus loin, les signaux du ou des capteurs inertiels peuvent notamment être utilisés pour programmer une position de fin de course, puis la détecter, pour détecter la position instantanée du tube, mais également pour détecter des dysfonctionnements de l'installation, déclencher l'entrée dans un mode d'apprentissage, ou pour faciliter le réglage initial ou le fonctionnement d'autres actionneurs liés à d'autres écrans de l'installation.

Dans le cadre de la présente demande, on désignera par capteur inertiel tout capteur d'accélération et/ou d'inclinaison. Suivant un mode de réalisation, on compare le signal du ou des capteurs inertiels à au moins une signature mémorisée et l'on déclenche une ou plusieurs actions de l'actionneur et/ou de l'unité de commande en présence de la signature mémorisée.

En particulier, on peut, par exemple à l'aide d'une télécommande, commander une séquence de mouvements, par exemple une séquence rapide de plusieurs courtes montées et courtes descentes, et reconnaître la signature accélérométrique correspondante à l'aide du ou des capteurs inertiels pour enclencher l'entrée dans un mode d'apprentissage.

On peut également reconnaître, grâce à une signature particulière mémorisée des signaux vibratoires et/ou d'inclinaison, certains mouvements provoqués manuellement par l'utilisateur et destinés à commander un déplacement de l'actionneur.

Suivant un mode de réalisation, on intègre au procédé une étape comporte consistant pour un utilisateur à une manipuler l'organe d'équilibrage ou le tube d'enroulement pour provoquer une rotation de l'organe d'équilibrage et/ou du tube d'enroulement autour de l'axe géométrique de référence, cette rotation étant détectée par le ou les capteurs inertiels, comparée à une signature prédéfinie et interprétée comme un ordre donné à l'actionneur. Il peut s'agir d'un ordre d'enroulement ou de déroulement, suivant la direction de la rotation. Il peut également s'agir, si l'actionneur est déjà actif, d'un ordre d'arrêt.

On peut également prévoir une étape consistant pour un utilisateur à frapper légèrement le tube d'enroulement ou l'organe d'équilibrage, le choc induit étant comparé à une signature prédéfinie et interprété comme un ordre d'arrêt ou de marche donné à l'actionneur, suivant l'état précédent de l'actionneur. On pourra par exemple prévoir que depuis un état arrêté, un premier choc soit interprété comme un ordre de descente, un deuxième choc comme un ordre d'arrêt, un troisième choc dans un court laps de temps après le deuxième comme un ordre de remontée.

On peut également, grâce à une signature particulière mémorisée des signaux vibratoires et/ou d'inclinaison, initier une action de paramétrage du premier actionneur.

On peut également reconnaître, grâce à une signature particulière mémorisée des signaux vibratoires et/ou d'inclinaison, un état de l'installation nécessitant un arrêt, et le cas échéant provoquer cet arrêt en présence de la signature, notamment un arrêt dans une position de fin de course prédéfinie. De façon similaire, on peut définir et mémoriser une signature particulière des signaux vibratoires et/ou d'inclinaison caractérisant le fait que le tube d'enroulement a rencontré un obstacle et, en présence d'un signal correspondant à la signature mémorisée, provoquer l'arrêt de l'installation.

On peut également utiliser les signaux du ou des capteurs inertiels pour paramétrer un compteur de tours délivrant à l'unité de mesure un signal représentatif de la rotation de la première partie de l'actionneur par rapport à la deuxième partie de l'actionneur, et notamment pour étalonner un tel compteur afin de faire coïncider une ou plusieurs valeurs du compteur de tours avec une ou plusieurs signatures mémorisées du ou des capteurs inertiels correspondant à des positions prédéterminées de l'organe d'équilibrage.

On peut également, suite à la comparaison des signaux en provenance du ou des capteurs inertiels à au moins une signature mémorisée prévoir la signalisation à destination d'un utilisateur, d'un faible niveau d'alimentation électrique de l'actionneur, en particulier d'un niveau de batterie faible.

Suivant un mode de réalisation préféré, le ou les capteurs inertiels comprennent un capteur d'inclinaison disposé de manière à détecter une inclinaison ou une variation d'inclinaison à l'organe d'équilibrage par rapport à un repère galiléen fixe. En effet, on constate que lors du déroulement et de l'enroulement de la toile, l'inclinaison de l'organe d'équilibrage varie. On peut dès lors mémoriser une signature du signal correspondant à l'atteinte par l'organe d'équilibrage d'une inclinaison que l'on désire indexer, qui correspond elle-même à une position que l'on souhaite indexer du tube d'enroulement, par exemple une position de fin de course.

Suivant un mode de réalisation, le ou les capteurs inertiels comprennent un accéléromètre disposé de manière à détecter une accélération verticale de l'axe de référence. Dans cette hypothèse, on peut mémoriser une signature du signal qui correspond à une séquence de montées et de descentes alternées de l'axe de référence dans un laps de temps donné.

Le ou les capteurs inertiels sont de préférence disposés sur un circuit imprimé de l'actionneur, inséré dans le carter tubulaire de l'actionneur et fixé vis-à-vis de la deuxième partie de l'actionneur.

L'installation peut être en outre équipée d'au moins un deuxième actionneur rotatif identique au premier actionneur rotatif et associé à un deuxième écran identique au premier écran. Dans cette hypothèse, on peut prévoir que l'on utilise des signaux en provenance du ou des capteurs inertiels fixes par rapport à l'organe d'équilibrage du premier actionneur pour programmer l'unité de commande associée au deuxième actionneur rotatif. L'installateur peut ainsi par exemple repérer et indexer une position de fin de course du premier actionneur en mémorisant la signature correspondante des signaux en provenance du ou des capteurs inertiels associés au premier actionneur, et transmettre cette signature à l'unité de commande du deuxième actionneur. On peut naturellement reproduire la même séquence d'apprentissage pour différentes signatures, caractéristiques de différents états du premier actionneur que l'on souhaite ainsi indexer.

Suivant un autre aspect de l'invention, celle-ci a trait à un dispositif de commande d'une installation équipée d'au moins un actionneur rotatif comportant une première partie solidaire d'un tube d'enroulement d'une toile d'écran mobile, et une deuxième partie solidaire d'un organe d'équilibrage, la première partie tournant par rapport à la deuxième partie autour d'un axe géométrique de référence du tube d'enroulement pour l'enroulement et le déroulement de la toile, le tube étant suspendu à la toile de sorte que l'axe géométrique de référence se déplace perpendiculairement à lui-même entre une position haute et une position basse lors de l'enroulement et du déroulement de la toile, le dispositif de commande comportant une unité de commande fixe par rapport à l'actionneur, au tube d'enroulement ou à l'organe d'équilibrage et reliée à un ou plusieurs capteurs inertiels fixes par rapport à l'organe d'équilibrage. La présence du ou des capteurs inertiels rend le dispositif parfaitement adapté à la mise en oeuvre des procédés précédemment décrits.

Suivant un mode de réalisation, l'unité de commande de l'actionneur est apte à traiter des signaux délivrés par le ou les capteurs inertiels, à reconnaître au moins une signature mémorisée des signaux et à exécuter une séquence de programme en présence de cette signature mémorisée.

Suivant un mode de réalisation, le ou les capteurs inertiels comprennent au moins un capteur d'inclinaison disposé de manière à détecter une inclinaison ou une variation d'inclinaison de l'organe d'équilibrage dans un repère galiléen fixe. L'organe d'équilibrage est tel que son inclinaison varie lors du déroulement et de l'enroulement de la toile, de sorte qu'à chaque position statique de l'axe du tube correspond de façon univoque une inclinaison de l'organe d'équilibrage. Pour indexer une position de l'axe du tube d'enroulement, il suffit alors de mémoriser une signature des signaux correspondant à l'inclinaison de l'organe d'équilibrage pour la position à indexer de l'axe du tube d'enroulement.

Suivant un autre mode de réalisation, le ou les capteurs inertiels comprennent au moins un accéléromètre disposé de manière à détecter une accélération verticale de l'axe de référence. On peut alors comparer les signaux à une signature qui correspond par exemple à une séquence de montées et de descentes alternées de l'axe de référence dans un laps de temps donné.

Le dispositif peut en outre comporter en outre un capteur de rotation de la première partie par rapport à la deuxième partie.

Suivant un autre aspect de l'invention, celle-ci a trait à une installation équipée d'un ou plusieurs écrans comportant chacun une toile associée à au moins un actionneur rotatif comportant une première partie solidaire d'un tube d'enroulement de la toile associée, et une deuxième partie solidaire d'un organe d'équilibrage, la première partie tournant par rapport à la deuxième partie autour d'un axe géométrique de référence du tube d'enroulement pour l'enroulement et le déroulement de la toile associée, le tube étant suspendu à la toile de sorte que l'axe géométrique de référence se déplace perpendiculairement à lui-même entre une position haute et une position basse lors de l'enroulement et du déroulement de la toile, chaque écran étant associé à une unité de commande reliée à un ou plusieurs capteurs inertiels fixes par rapport à l'organe d'équilibrage.

Dans une installation comportant plusieurs écrans tels que décrits ci-dessus, on aura avantage à ce que les unités de commandes des différents actionneurs, ou de certains d'entre eux au moins, puissent communiquer, et notamment s'échanger de l'information relative à l'état des capteurs inertiels, où à certaines signatures des signaux de ces capteurs.

### BRÈVE DESCRIPTION DES FIGURES

D'autres caractéristiques et avantages de l'invention ressortiront à la lecture de la description qui suit, en référence aux figures annexées, qui illustrent :
- la figure 1, une installation domotique selon un mode de réalisation de l'invention ;
- la figure 2, une vue schématique en coupe transversale d'un écran de l'installation de la figure 1 ;
- la figure 3, une vue schématique d'un tube d'enroulement d'un écran de l'installation de la figure 1 ;
- la figure 4, une vue schématique en coupe d'une variante de l'écran de la figure 2 ;
- la figure 5, un oscillogramme temporel caractéristique obtenu avec un accéléromètre intégré à l'écran de la figure 3 ;
- la figure 6, un autre oscillogramme temporel caractéristique obtenu avec un accéléromètre intégré à l'écran de la figure 3 ;
- la figure 7, une manipulation pour ordonner à un écran domotique selon les figures 2 à 4 de monter ou descendre ;
- la figure 8, une manipulation pour ordonner l'arrêt d'un écran domotique selon les figures 2 à 4.

Pour plus de clarté, les éléments identiques seront repérés par des signes de référence identiques sur l'ensemble des figures.

### DESCRIPTION DETAILLEE D'UN MODE DE RÉALISATION

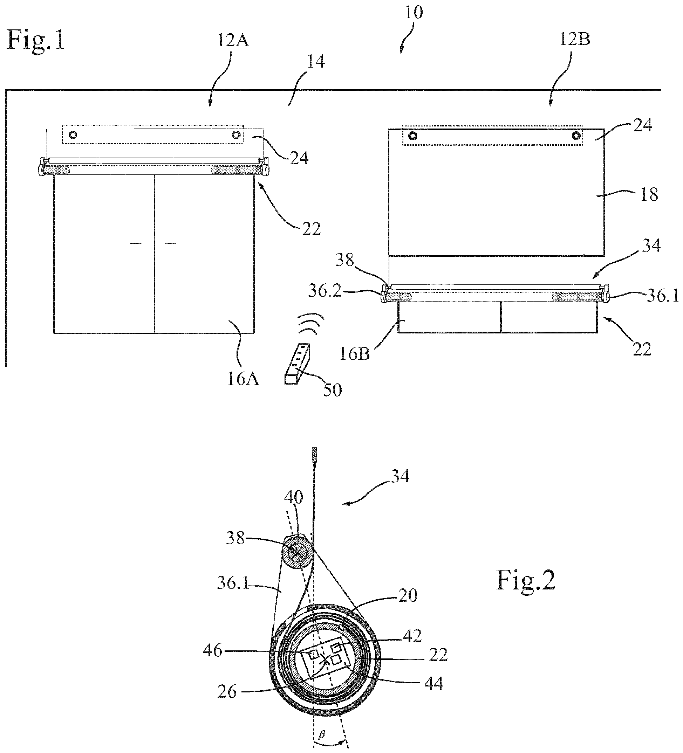

On a représenté sur la figure 1 une installation domotique 10 comportant deux dispositifs d'écrans d'occultation 12A, 12B identiques disposés, à titre illustratif, côte à côte sur une même cloison servant de support 14, devant deux ouvertures 16A, 16B.

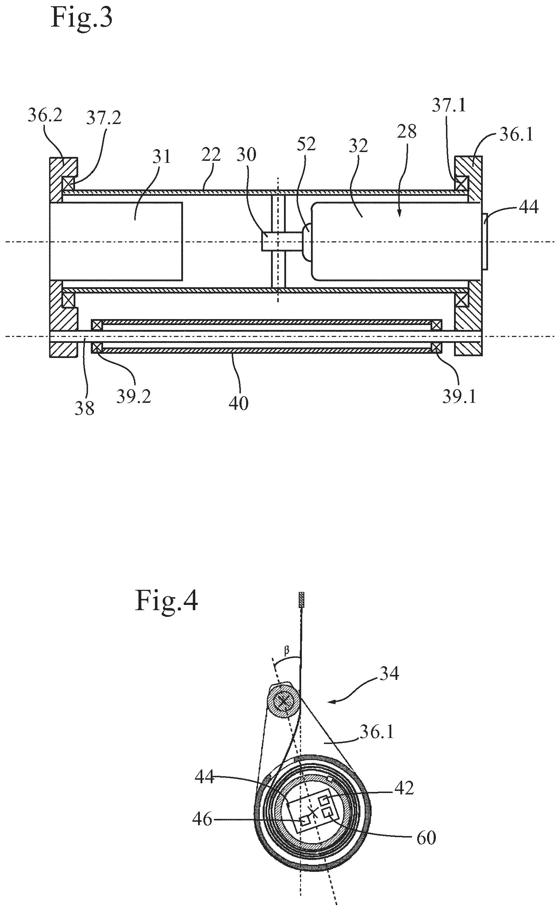

Chaque dispositif d'écran 12A, 12B, illustré en détail sur les figures 2 et 3, est constitué par une toile 18, enroulée par une extrémité 20 autour d'un tube d'enroulement 22, l'autre extrémité 24 étant fixée par tout moyen approprié au support 14, de telle manière que le tube d'enroulement 22 soit suspendu par la toile 18. De manière remarquable, la seule liaison entre chaque écran 12A, 12B et le bâtiment est réalisée au niveau de l'extrémité 24 de la toile, aucun autre contact n'existant entre chaque dispositif d'écran 12A, 12B et le bâtiment. Le tube d'enroulement 22 définit un axe géométrique de référence 26. Dans le tube d'enroulement 22 est logé à une première extrémité du tube un actionneur 28 présentant un arbre de sortie 30solidaire du tube d'enroulement 22 et coaxial avec ce dernier. A une deuxième extrémité du tube d'enroulement 22 est logé un dispositif d'alimentation 31, par exemple un pack de piles ou batteries. Le carter 32 de l'actionneur est solidaire d'un organe d'équilibrage 34 comportant deux flasques latéraux 36.1, 36.2 reliés l'un à l'autre rigidement à l'aide d'une barre 38 supportant un rouleau 40 qui vient en appui contre la toile 18. Les flasques 36.1 et 36.2 comprennent des paliers 37.1, 37.2 sur lesquels le tube d'enroulement 22 est monté libre en rotation. Le rouleau 40 est quant à lui monté tournant sur la barre 38 par l'intermédiaires de paliers 39.1, 39.2. L'organe d'équilibrage 34, en venant en appui contre la toile 18, assure à chaque instant un couple résistant qui s'oppose à la rotation du carter 32 dans le sens de déroulement de la toile 18. La connexion électrique entre le dispositif d'alimentation 31 et l'actionneur 28 peut cheminer par la barre 38.

Pour un écran suspendu uniquement par la toile, le couple nécessaire au maintien statique de la toile 18 dans une position donnée, entre une position de fin de course haute et une position de fin de course basse, dépend notamment du diamètre de la toile 18 restant enroulée sur le tube d'enroulement 22 et du poids de cette toile 18 restant enroulée, de sorte que le couple d'équilibrage varie avec la position de l'axe de référence 26 du tube d'enroulement 22, entre position haute et position basse. Pour cette raison, la position angulaire **β** de l'organe d'équilibrage par rapport à la verticale varie en fonction du degré d'enroulement, donc de la position de l'axe de référence 26 du tube d'enroulement 22. A l'arrêt, une relation univoque peut être établie entre une hauteur de l'axe de référence 26 du tube d'enroulement 22 et un angle **β** de l'organe d'équilibrage 34.

Dans ce mode de réalisation, cette relation univoque est mise à profit pour indexer une position de fin de course basse de l'axe d'enroulement 26. Pour ce faire, un capteur d'inclinaison 42 est monté de manière à être fixe par rapport aux flasques 38 et à la barre 40 de l'organe d'équilibrage 34. Ce capteur d'inclinaison 42 peut être de tout type, il s'agit de préférence d'un microsystème électromécanique mettant en oeuvre par exemple un transducteur à peigne de silicium ou cristal piézoélectrique. En pratique, le capteur d'inclinaison 42 est de préférence monté sur une plaque de circuit imprimé fixée dans le carter 32 cylindrique de l'actionneur 28, par exemple sur le flasque 36.2 de l'organe d'équilibrage, cette plaque constituant également une unité de commande locale 44 de l'actionneur 28, intégrant une unité de traitement du signal 46 reliée au capteur d'inclinaison 42.

L'unité de commande locale embarquée 44 de chaque dispositif d'écran 12A, 12B est également pourvue d'une interface de communication 48 permettant des échanges d'information avec une télécommande nomade 50, avec les unités de commande 44 des actionneurs des autres dispositifs d'écran 12A, 12B de l'installation et/ou avec les télécommandes nomades associées à chacune des unités de commande 44 des actionneurs des autres dispositifs d'écran 12A, 12B de l'installation. Chaque tube d'enroulement 22 est également pourvu d'un compte-tours 52 relié à l'unité de traitement du signal 46, qui peut être réalisé par exemple par mesure électronique, optique, magnétique sur les circuits de l'actionneur associé (mesure de couple, de vitesse, de l'arbre de sortie ou de l'arbre moteur) ou de toute autre manière connue.

L'installation 10 peut être mise en oeuvre de la façon suivante. L'installateur procède tout d'abord au paramétrage d'un premier écran, par exemple l'écran 12A, à l'aide de la télécommande nomade 50. Pour se faire, il déroule l'écran 12A jusqu'à atteindre une position souhaitée de fin de course basse. A l'arrêt dans cette position basse, l'installateur demande à l'unité de commande locale 44 de l'écran 12A d'indexer cette position en mémorisant le signal du capteur d'inclinaison 42 correspondant à cette position ainsi que le signal du compte-tours 52. Puis l'installateur procède à la remontée de l'écran jusqu'à atteindre une position souhaitée de fin de course haute et l'unité de commande 44 mémorise le nombre de tours correspondant à la remontée de l'écran, telle que mesuré par le compte-tours 52. A la fin de cette procédure d'apprentissage, l'installateur peut demander à l'unité de commande 44 du premier écran 12A de communiquer directement ou indirectement à l'unité de commande 44 du second écran 12B la signature du signal du capteur d'inclinaison 42 correspondant à la position basse et le nombre de tour correspondant à la remontée de l'écran 12A. Dans l'hypothèse où la disposition du second écran 12B est identique à celle du premier écran, ces données permettent d'accélérer le paramétrage du second écran 12B. Cette procédure, qui peut naturellement être étendue à un nombre quelconque d'écrans, permet de garantir, de façon particulièrement simple, des positions de fin de course basse et de fin de course haute identiques pour tous les écrans identiques d'une pièce, d'un étage, voire d'une façade d'un bâtiment, ceci sans avoir à procéder à un réglage individuel de butées de fin de course.

Une fois paramétrée, l'unité de commande embarquée 44 de chaque actionneur de l'installation tire partie des signaux en provenance du compte-tours 52 et du capteur d'inclinaison 42 pour déterminer la position instantanée de l'écran 12A, 12B associé. Si l'on souhaite que les manoeuvres de déroulement ou d'enroulement des actionneurs de l'installation soient simultanées et coordonnées, on peut faire en sorte que la télécommande nomade 50 pilote une des commandes locales 44 devenant commande maître, cette commande locale maître communiquant en temps réel avec les commandes locales des autres écrans de l'installation 10, par exemple pour caler la vitesse des actionneurs sur l'actionneur maître, en se fondant notamment sur les informations délivrés par le capteur d'inclinaison 42 et le compte-tours 52. Si l'on souhaite avant tout que les positions finales adoptées par tous les écrans de l'installation soient identiques, on peut faire en sorte que tous les écrans suivent un écran maître piloté par l'utilisateur par exemple à l'aide d'une télécommande nomade. Lorsque l'utilisateur arrête l'écran maître dans sa position finale souhaitée, l'unité de commande embarquée 44 de l'écran maître communique aux autres écrans les informations déterminant sa position, correspondant aux lectures du capteur d'inclinaison 42 et du compte-tours 52.

Le cas échéant, le compte-tours 52 peut être recalé à chaque passage par la position de fin de course basse ou toute autre position remarquable. Inversement, si l'information délivrée par le compte-tours 52 est plus précise et moins susceptible de dériver dans le temps que l'information délivrée par le capteur d'inclinaison 42, l'unité de commande 44 peut procéder régulièrement à un réétalonnage du capteur d'inclinaison 42 ou de la position de fin de course sur la base des signaux du compte-tours 52. Alternativement, une incohérence entre les informations délivrées par le compte-tours 52 et par le capteur d'inclinaison 42 est révélatrice d'une arrivée de l'écran sur un obstacle empêchant la descente du tube d'enroulement 22. Dans un tel cas en effet, l'arbre 30 peut continuer à tourner pour dérouler la toile 18, de sorte que le compte-tours 52 associé à l'arbre 30 délivre un signal de rotation alors que le capteur d'inclinaison 42 lié à l'organe d'équilibrage 34 détecte un arrêt du mouvement de descente. On peut programmer dans l'unité de commande embarquée 44 une action spécifique à mettre en oeuvre dans un tel cas, par exemple l'arrêt de l'actionneur 28.

On peut également reconnaître grâce à au capteur d'inclinaison 42 certaines situations exceptionnelles ou non conformes nécessitant un arrêt immédiat de l'actionneur. En particulier, de brusques et importantes variations du signal du capteur d'inclinaison 42 non corrélées à des variations au niveau de la commande 44 de l'actionneur 28 suggèrent une rencontre avec un obstacle, ou un autre type de dysfonctionnement. Il en va de même d'une mesure angulaire hors d'une plage de fonctionnement prédéfinie.

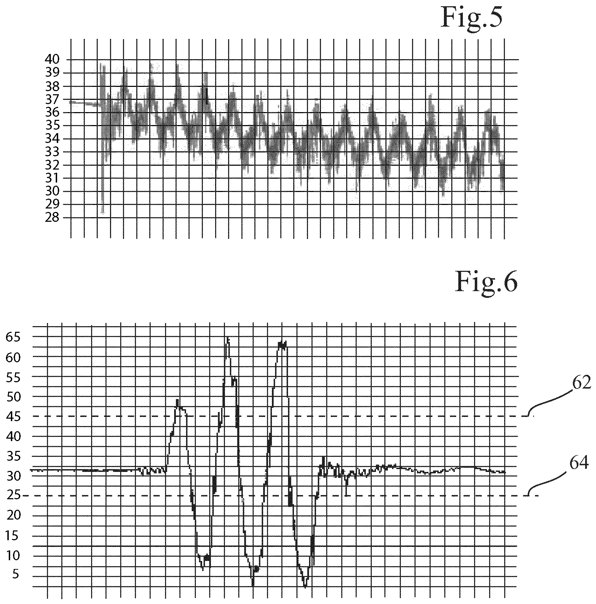

On peut obtenir essentiellement les mêmes informations en remplaçant le capteur d'inclinaison par un capteur accélérométrique monoaxial ou de préférence multiaxial. Suivant une variante illustrée sur la figure 4, on peut intégrer à chaque unité de commande 44 un accéléromètre 60 permettant de mesurer une accélération suivant deux axes, voire trois axes, de préférence sur le circuit imprimé de l'unité de commande 44. Ainsi, il est possible de mesurer à la fois une inclinaison de l'accéléromètre 60 variant avec celle de l'organe d'équilibrage 34 et une composante verticale de l'accélération, quelle que soit la hauteur de l'axe 26 du tube d'enroulement 22. Il s'avère que la mesure de l'inclinaison peut être utilisée pour détecter la rotation du tube. En effet, du fait d'une forme de tube à section circulaire irrégulière (due à des méplats d'accrochage de la toile, à des formes polygonales ou autre irrégularités de fabrication), la toile 18 s'enroule sur le tube d'enroulement 22 en prenant une forme non pas circulaire, mais quelque peu ovale, de sorte que, pour une vitesse de rotation constante donnée de l'arbre 30 et du tube d'enroulement 22, la vitesse de translation verticale de l'axe de rotation 26 du tube d'enroulement 22 n'est pas parfaitement constante mais oscille légèrement autour d'une valeur moyenne. Ces oscillations de la vitesse correspondent à des variations de l'inclinaison de l'organe d'équilibrage 34, dans un plan perpendiculaire à son axe longitudinal. Elles sont détectées par l'accéléromètre 60, comme illustré sur la figure 5. L'unité de traitement du signal 46 intégrée à l'unité de commande embarquée 44 peut mettre à profit cette information soit pour constituer un compte-tours ayant la même fonction que le compte-tours 52 du mode de réalisation des figures 1 et 2 et remplaçant le cas échéant ce dernier, soit pour consolider l'information du compte-tours 52 associé à l'arbre 30. La redondance ainsi obtenue peut permettre de détecter des dysfonctionnements de l'unité de commande 44 ou de l'un des capteurs 52, 60. Elle peut également permettre de détecter des dysfonctionnements de l'écran 12A, 12B lui-même, par exemple du fait d'un obstacle empêchant la descente du tube d'enroulement 22. Dans un tel cas en effet, l'arbre 30 peut continuer à tourner pour dérouler la toile 18, de sorte que le compte-tours 52 associé à l'arbre 30 délivre un signal de rotation alors que l'accéléromètre 60 lié à l'organe d'équilibrage 34 détecte un arrêt du mouvement de descente. On peut programmer dans l'unité de commande embarquée 44 une action spécifique à mettre en oeuvre dans un tel cas, par exemple l'arrêt des actionneurs 28. Le signal de l'accéléromètre 60 peut également être traité pour estimer la vitesse de déroulement et la d'enroulement de la toile 18, qui peut être utilisée comme indicateur de la charge électrique résiduelle de la source électrique 31 embarquée dans le tube 22 pour alimenter l'actionneur 28. En effet, en l'absence de régulation de la vitesse de l'actionneur 28 par l'unité de commande 44, la vitesse est fonction de la tension aux bornes de l'actionneur 28, une baisse de tension se traduisant par un ralentissement et donc par un temps plus important pour effectuer un nombre de tours donné.

On peut également mettre à profit l'accéléromètre 60 pour soumettre des ordres à l'unité de commande locale 44. On peut par exemple convenir qu'une séquence particulière de montées et de descentes de la toile 18, commandées à partir de la télécommande nomade 50, soit utilisée pour imposer à l'unité de commande embarquée 44 l'entrée dans un mode d'apprentissage. A titre d'exemple, on a représenté sur la figure 6 la réponse de l'accéléromètre 60 à une telle séquence de courts et rapides allers retours. On peut faire correspondre à cette séquence une signature particulière, par exemple en repérant les franchissements d'une valeur seuil positive 62 et d'une valeur seuil négative 64 du signal accélérométrique dans un intervalle de temps donné et en imposant à l'unité de commande embarquée l'entrée en mode d'apprentissage si l'on constate une suite d'au moins M franchissements du seuil positif et d'au moins N franchissements du seuil négatif dans l'intervalle de temps observé, M et N étant des nombres préprogrammés.

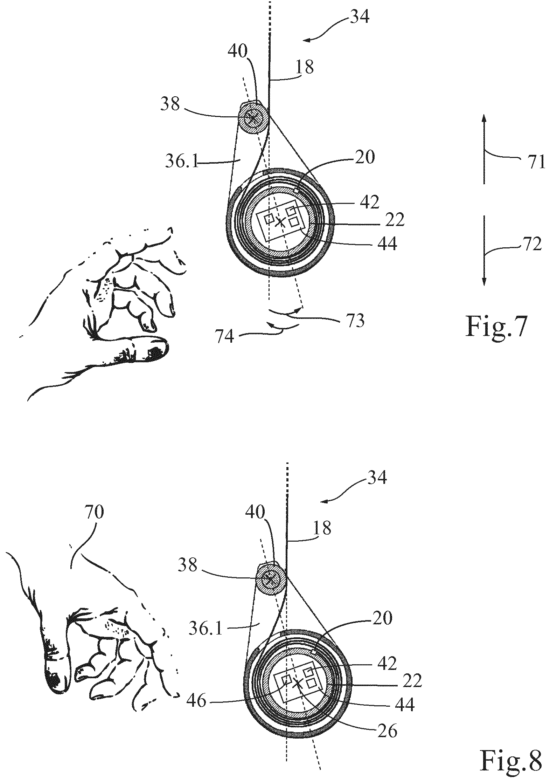

Le ou les capteurs inertiels - un ou plusieurs inclinomètres 42 et/ou un ou plusieurs accéléromètres mono- ou multiaxiaux 60 - peuvent également être utilisés pour commander les montées, descentes, et arrêts du tube d'enroulement 22 à la main, par interaction directe de l'utilisateur avec le tube d'enroulement 22, ou l'organe d'équilibrage 34, notamment au niveau l'un des flasques 36.14, 36.2, de la barre 38 ou du rouleau 40. Lorsque le tube d'enroulement est à l'arrêt comme illustré sur la figure 7, un mouvement d'inclinaison du tube d'enroulement 22 autour de l'axe de référence 26, provoqué par l'utilisateur 70 agissant directement sur le tube d'enroulement 22 ou l'un des flasques 36.1, 36.2, est interprété par l'unité de commande 44 comme un ordre de monter (71) ou descendre (72) le tube d'enroulement 22, suivant la direction (73, 74) de la rotation. De façon similaire, on peut prévoir que lorsque le tube d'enroulement 22 est en mouvement ascendant ou descendant, un mouvement de basculement du tube d'enroulement dans un sens ou dans l'autre autour de l'axe de référence 26, imprimé directement par l'utilisateur, soit interprété comme un ordre d'arrêt de l'actionneur. Si une telle action paraît trop complexe sur le tube en mouvement, on peut également prévoir de détecter un léger choc sur l'un des flasques 36.1, 36.2, tel qu'une pichenette donnée à la main (figure 8), pour caractériser un ordre d'arrêt.

De nombreuses variantes sont envisagées.

L'organe d'équilibrage peut être un élément relié avec un jeu à des coulisses ou des câbles, comme décrit dans le document WO 12 085 252.

Le ou les capteurs inertiels 42, 60 peuvent être fixés directement à l'organe d'équilibrage 34 ou au carter 38.1, 38.2 de l'actionneur 28 par tout moyen approprié. Le circuit de l'unité de commande 44 peut être de tout type. Il peut être fixé ou intégré au carter 32 de l'actionneur 28.

L'organe d'équilibrage peut prendre différentes formes, et notamment toute forme décrite dans la demande WO 2012/085252 dont le contenu est sur ce point intégré ici par référence. On peut utiliser, pour entraîner le tube d'enroulement, plusieurs actionneurs synchronisés.

Le ou les actionneurs peuvent être fixés au tube par leur carter et à l'organe d'équilibrage par leur arbre de sortie.

Pour limiter la transmission des vibrations et permettre certaines tolérances de montage, le ou les actionneurs, des éléments d'amortissement de vibrations, par exemple de type élastomère, peuvent être interposés entre le ou les actionneurs, le tube d'enroulement et l'organe d'équilibrage. Alternativement, un filtrage électronique ou logiciel est mis en oeuvre.

L'accéléromètre 60 peut être utilisé en présence ou en l'absence de capteur d'inclinaison 42.

L'installation peut comporter un nombre quelconque d'écrans 12A, 12B et d'actionneurs 28, ce nombre pouvant être réduit à un.

Le ou les écrans 12.1, 12.2 peuvent avoir des fonctions variées, et notamment une fonction d'occultation partielle ou totale d'une ouverture 16A, 16B ou une fonction d'écran de projection.

L'énergie nécessaire à l'entraînement du ou des actionneurs 28 peuvent être fournis par tout moyen approprié, soit à l'aide de câbles courant le long de la toile, soit par une source autonome 31 logée dans le tube d'enroulement 22. Il en va de même de l'énergie nécessaire au circuit de commande 44.

## Revendications

1. Procédé de commande d'une installation (10) équipée d'au moins un premier actionneur rotatif (28) comportant une première partie (30) solidaire d'un tube d'enroulement (22) d'une toile (18) d'un premier écran mobile (12A) associé au premier actionneur (28), et une deuxième partie (32) solidaire d'un organe d'équilibrage (34), la première partie (30) tournant par rapport à la deuxième partie (32) autour d'un axe géométrique de référence (26) du tube d'enroulement (22) pour l'enroulement et le déroulement de la toile (18), le tube d'enroulement (22) étant suspendu à la toile (18) de sorte que l'axe géométrique de référence (26) se déplace perpendiculairement à lui-même entre une position de fin de course haute et une position de fin de course basse lors de l'enroulement et du déroulement de la toile (18), **caractérisé en ce que** l'on utilise des signaux en provenance d'un ou plusieurs capteurs inertiels (42, 60) fixes par rapport à l'organe d'équilibrage (34) pour commander le premier actionneur rotatif (28).

2. Procédé selon la revendication 1, **caractérisé en ce que** l'on compare les signaux du ou des capteurs inertiels (42, 60) à au moins une signature mémorisée et l'on déclenche une ou plusieurs actions du premier actionneur et/ou d'une unité de commande (44) en présence de la signature mémorisée.

3. Procédé selon la revendication 2, **caractérisé en ce que** la ou les actions comprennent l'entrée dans un mode d'apprentissage.

4. Procédé selon la revendication 2 ou la revendication 3, **caractérisé en ce que** la ou les actions comprennent une action de paramétrage du premier actionneur.

5. Procédé selon l'une quelconque des revendications 2 à 4, **caractérisé en ce que** la ou les actions comprennent l'arrêt du premier actionneur.

6. Procédé selon l'une quelconque des revendications 2 à 5, **caractérisé en ce que** la ou les actions comprennent le paramétrage d'un compteur de tours (52) délivrant un signal représentatif de la rotation de la première partie (30) du premier actionneur par rapport à la deuxième partie (32) du premier actionneur.

7. Procédé selon l'une quelconque des revendications 2 à 6, **caractérisé en ce que** la ou les actions comprennent la signalisation à destination d'un utilisateur, d'un niveau de batterie faible.

8. Procédé selon l'une quelconque des revendications 2 à 7, **caractérisé en ce que** la signature du signal correspond à une atteinte par l'organe d'équilibrage d'une inclinaison prédéterminée.

9. Procédé selon l'une quelconques des revendications 2 à 8, **caractérisé en ce que** la signature du signal correspond à une séquence de montées et de descentes alternées de l'axe de référence dans un laps de temps donné.

10. Procédé selon l'une quelconques des revendications précédentes, **caractérisé en ce qu'**il comporte de la part d'un utilisateur (70) une manipulation (71, 72) de l'organe d'équilibrage (44) ou du tube d'enroulement (22) pour provoquer une rotation de l'organe d'équilibrage (44) et/ou du tube d'enroulement (22) autour de l'axe géométrique de référence (26), la rotation étant détectée par le ou les capteurs inertiels (42, 60).

11. Procédé selon l'une quelconque des revendications précédentes, l'installation étant en outre équipée d'au moins un deuxième actionneur rotatif identique au premier actionneur rotatif et associé à un deuxième écran mobile (12B), le procédé étant **caractérisé en ce que** l'on utilise des signaux en provenance du ou des capteurs inertiels (42, 60) fixes par rapport à l'organe d'équilibrage (34) du premier actionneur (28) pour programmer l'unité de commande embarquée (44) du deuxième actionneur rotatif.

12. Installation domotique (10) comportant un dispositif de commande et équipée d'au moins un premier actionneur rotatif (28) comportant une première partie (30) solidaire d'un tube d'enroulement (22) d'une toile (18) d'écran mobile (12A, 12B), et une deuxième partie (32) solidaire d'un organe d'équilibrage (34), la première partie tournant par rapport à la deuxième partie autour d'un axe géométrique de référence (26) du tube d'enroulement (22) pour l'enroulement et le déroulement de la toile (18), le tube d'enroulement (22) étant suspendu à la toile (18) de sorte que l'axe géométrique de référence (26) se déplace verticalement perpendiculairement à lui-même entre une position haute et une position basse lors de l'enroulement et du déroulement de la toile (18), **caractérisé en ce que** le dispositif de commande comporte une unité de commande (44) fixe par rapport à l'actionneur rotatif (28) et/ou à l'organe d'équilibrage (34) et reliée à un ou plusieurs capteurs inertiels (42, 60) fixes par rapport à l'organe d'équilibrage (34).

13. Installation domotique (10) selon la revendication 12, **caractérisé en ce que** l'unité de commande (44) de l'actionneur est apte à traiter des signaux (46) délivrés par le ou les capteurs inertiels (42, 60), à reconnaître au moins une signature mémorisée des signaux et à exécuter une séquence de programme en présence de cette signature mémorisée.

14. Installation domotique (10) selon la revendication 12 ou la revendication 13, **caractérisé en ce que** le ou les capteurs inertiels (42, 60) comprennent au moins un capteur d'inclinaison (42) disposé de manière à détecter une inclinaison ou une variation d'inclinaison de l'organe d'équilibrage dans un repère galiléen fixe.

15. Installation domotique (10) selon l'une quelconque des revendications 12 à 14, **caractérisé en ce que** le ou les capteurs inertiels (42, 60) comprennent au moins un accéléromètre (60) disposé de manière à détecter une accélération verticale de l'axe de référence (26).

16. Installation domotique (10) selon l'une quelconque des revendications 12 à 15, **caractérisé en ce qu'**il comporte en outre un capteur de rotation (52) de la première partie par rapport à la deuxième partie.

## Patentansprüche

1. Verfahren zum Steuern einer Anlage (10), die mit mindestens einem ersten Drehantrieb (28) ausgestattet ist, umfassend einen ersten Teil (30), der mit einem Wickelrohr (22) eines Tuchs (18) eines ersten beweglichen Schirms (12A), der dem ersten Antrieb (28) zugeordnet ist, fest verbunden ist, und einen zweiten Teil (32), der mit einem Ausgleichsorgan (34) fest verbunden ist, wobei der erste Teil (30) in Bezug zum zweiten Teil (32) um eine geometrische Referenzachse (26) des Wickelrohrs (22) zum Aufwickeln und zum Abwickeln des Tuchs (18) dreht, wobei das Wickelrohr (22) derart am Tuch (18) angebracht ist, dass sich die geometrische Referenzachse (26) beim Aufwickeln und beim Abwickeln des Tuchs (18) senkrecht zu sich selbst zwischen einer oberen Endlagenposition und einer unteren Endlagenposition verlagert, **dadurch gekennzeichnet, dass** Signale von in Bezug zum Ausgleichsorgan (34) einem oder mehreren festen Trägheitssensoren (42, 60) verwendet werden, um den ersten Drehantrieb (28) zu steuern.

2. Verfahren nach Anspruch 1, **dadurch gekennzeichnet, dass** man die Signale des oder der Trägheitssensoren (42, 60) mit mindestens einer gespeicherten Signatur vergleicht und man eine oder mehrere Aktionen des ersten Antriebs und/oder einer Steuereinheit (44) in Gegenwart der gespeicherten Signatur auslöst.

3. Verfahren nach Anspruch 2, **dadurch gekennzeichnet, dass** die Aktion(en) den Eintritt in einen Lernmodus umfassen.

4. Verfahren nach Anspruch 2 oder Anspruch 3, **dadurch gekennzeichnet, dass** die Aktionen(en) eine Parametrieraktion des ersten Antriebs umfassen.

5. Verfahren nach einem der Ansprüche 2 bis 4, **dadurch gekennzeichnet, dass** die Aktion(en) den Stopp des ersten Antriebs umfassen.

6. Verfahren nach einem der Ansprüche 2 bis 5, **dadurch gekennzeichnet, dass** die Aktion(en) die Parametrierung eines Umdrehungszählers (52) umfassen, der ein Signal bereitstellt, das für die Rotation des ersten Teils (30) des ersten Antriebs in Bezug zum zweiten Teil (32) des ersten Antriebs repräsentativ ist.

7. Verfahren nach einem der Ansprüche 2 bis 6, **dadurch gekennzeichnet, dass** die Aktion(en) die Mitteilung in Richtung eines Benutzers eines niedrigen Batteriestands umfassen.

8. Verfahren nach einem der Ansprüche 2 bis 7, **dadurch gekennzeichnet, dass** die Signatur des Signals einem Erreichen von dem Ausgleichsorgan einer vorbestimmten Neigung entspricht.

9. Verfahren nach einem der Ansprüche 2 bis 8, **dadurch gekennzeichnet, dass** die Signatur des Signals einer alternierenden Sequenz von Auf- und Abwärtsbewegungen der Referenzachse in einem bestimmten Zeitabschnitt entspricht.

10. Verfahren nach einem der vorangehenden Ansprüche, **dadurch gekennzeichnet, dass** es von Seiten eines Benutzers (70) eine Bedienung (71, 72) des Ausgleichsorgans (44) oder des Wickelrohrs (22) aufweist, um eine Rotation des Ausgleichsorgans (44) und/oder des Wickelrohrs (22) um die geometrische Referenzachse (26) zu bewirken, wobei die Rotation von dem oder den Trägheitssensoren (42, 60) ermittelt wird.

11. Verfahren nach einem der vorangehenden Ansprüche, wobei die Anlage ferner mit mindestens einem zweiten Drehantrieb ausgestattet ist, der mit dem ersten Drehantrieb identisch ist und einem zweiten beweglichen Schirm (12B) zugeordnet ist, wobei das Verfahren **dadurch gekennzeichnet ist, dass** Signale von in Bezug zum Ausgleichsorgan (34) des ersten Antriebs (28) einem oder mehreren festen Trägheitssensoren (42, 60) verwendet werden, um die integrierte Steuereinheit (44) des zweiten Drehantriebs zu programmieren.

12. Haustechnische Anlage (10), die eine Steuervorrichtung aufweist und mit mindestens einem ersten Drehantrieb (28) ausgestattet ist, der einen ersten Teil (30), der mit einem Wickelrohr (22) eines Tuchs (18) eines ersten beweglichen Schirms (12A, 12B) fest verbunden ist, und einen zweiten Teil (32), der mit einem Ausgleichsorgan (34) fest verbunden ist, wobei der erste Teil in Bezug zum zweiten Teil um eine geometrische Referenzachse (26) des Wickelrohrs (22) zum Aufwickeln und zum Abwickeln des Tuchs (18) dreht, wobei das Wickelrohr (22) derart am Tuch (18) angebracht ist, dass sich die geometrische Referenzachse (26) beim Aufwickeln und beim Abwickeln des Tuchs (18) vertikal senkrecht zu sich selbst zwischen einer oberen Endlagenposition und einer unteren Endlagenposition verlagert, **dadurch gekennzeichnet, dass** die Steuervorrichtung eine Steuereinheit (44) aufweist, die in Bezug zum Drehantrieb (28) und/oder zum Ausgleichsorgan (34) fest ist und mit einem oder mehreren Trägheitssensoren (42, 60) verbunden ist, die in Bezug zum Ausgleichsorgan (34) fest sind.

13. Haustechnische Anlage (10) nach Anspruch 12, **dadurch gekennzeichnet, dass** die Steuereinheit (44) des Antriebs imstande ist, Signale (46) zu verarbeiten, die von dem oder den Trägheitssensoren (42, 60) bereitgestellt werden, mindestens eine gespeicherte Signatur der Signale zu erkennen und eine Programmsequenz in Gegenwart dieser gespeicherten Signatur auszuführen.

14. Haustechnische Anlage nach Anspruch 12 oder Anspruch 13, **dadurch gekennzeichnet, dass** der oder die Trägheitssensoren (42, 60) mindestens einen Neigungssensor (42) umfassen, der derart angeordnet ist, dass eine Neigung oder eine Schwankung der Neigung des Ausgleichsorgans in einem festen Galileischen Bezugssystem erkannt wird.

15. Haustechnische Anlage (10) nach einem der Ansprüche 12 bis 14, **dadurch gekennzeichnet, dass** der oder die Trägheitssensoren (42, 60) mindestens einen Beschleunigungsmesser (60) umfassen, der derart angeordnet ist, dass eine vertikale Beschleunigung der Referenzachse (26) erkannt wird.

16. Haustechnische Anlage (10) nach einem der Ansprüche 12 bis 15, **dadurch gekennzeichnet, dass** er ferner einen Rotationssensor (52) des ersten Teils in Bezug zum zweiten Teil aufweist.

## Claims

1. A method for controlling an installation (10) equipped with at least a first rotating actuator (28) including a first part (30) secured to a winding tube (22) for a canvas (18) of a first moving screen (12A) associated with the first actuator (28), and a second part (32) secured to a balancing member (34), the first part (30) rotating relative to the second part (32) around a geometric reference axis (26) of the winding tube (22) for the winding and unwinding of the canvas (18), the winding tube (22) being suspended from the canvas (18) such that the geometric reference axis (26) moves perpendicular to itself between a high end-of-travel position and a low end-of-travel position during the winding and unwinding of the canvas (18), **characterized in that** signals are used originating from one or several inertial sensors (42, 60) that are stationary relative to the balancing member (34) to control the first rotating actuator (28).

2. The method according to claim 1, **characterized in that** the signals from the inertial sensor(s) (42, 60) are compared to at least one stored signature and one or several actions of the first actuator and/or a control unit (44) are triggered in the presence of the stored signature.

3. The method according to claim 2, **characterized in that** the actions comprise entering a learning mode.

4. The method according to claim 2 or claim 3, **characterized in that** the action(s) comprise an action for configuring the first actuator.

5. The method according to any one of claims 2 to 4, **characterized in that** the action(s) comprise stopping the first actuator.

6. The method according to any one of claims 2 to 5, **characterized in that** the action(s) comprise configuring a revolution counter (52) delivering a signal representative of the rotation of the first part (30) of the first actuator relative to the second part (32) of the first actuator.

7. The method according to any one of claims 2 to 6, **characterized in that** the action(s) comprise signaling a low battery level to a user.

8. The method according to any one of claims 2 to 7, **characterized in that** the signature of the signal corresponds to the arrival by the balancing member at a predetermined incline.

9. The method according to any one of claims 2 to 8, **characterized in that** the signature of the signal corresponds to a sequence of alternating rising and lowering movements of the reference axis over a given time period.

10. The method according to any one of the preceding claims, **characterized in that** it includes a manipulation (71, 72) by a user (70) of the balancing member (44) or of the winding tube (22) to cause a rotation of the balancing member (44) and/or the winding tube (22) around the geometric reference axis (26), the rotation being detected by the inertial sensor(s) (42, 60).

11. The method according to any one of the preceding claims, the installation further being equipped with at least one second rotating actuator identical to the first rotating actuator and associated with a second moving screen (12B), the method being **characterized in that** signals are used originating from the inertial sensor(s) (42, 60), which are stationary relative to the balancing member (34) of the first actuator (28), to program the onboard control unit (44) of the second rotating actuator.

12. A home automation installation (10) including a control device and equipped with at least one first rotating actuator (28) including a first part (30) secured to a winding tube (22) for a canvas (18) of a moving screen (12A, 12B), and a second part (32) secured to a balancing member (34), the first part rotating relative to the second part around a geometric reference axis (26) of the winding tube (22) for the winding and unwinding of the canvas (18), the winding tube (22) being suspended from the canvas (18) such that the geometric reference axis (26) moves vertically perpendicular to itself between a high position and a low position during the winding and unwinding of the canvas (18), **characterized in that** the control device includes a control unit (44) that is stationary relative to the rotating actuator (28) and/or the balancing member (34) and connected to one or several inertial sensors (42, 60) that are stationary relative to the balancing member (34).

13. the home automation installation (10) according to claim 12, **characterized in that** the control unit (44) of the actuator is able to process signals (46) delivered by the inertial sensor(s) (42, 60), to recognize at least one stored signature of the signals and to carry out a program sequence in the presence of the stored signature.

14. the home automation installation (10) according to claim 12 or claim 13, **characterized in that** the inertial sensor(s) (42, 60) comprise at least one incline sensor (42) arranged so as to detect an incline or an incline variation of the balancing member in a fixed Galilean plane of reference.

15. The home automation installation (10) according to any one of claims 12 to 14, **characterized in that** the inertial sensor(s) (42, 60) comprise at least one accelerometer (60) arranged so as to detect a vertical acceleration of the reference axis (26).

16. The home automation installation (10) according to any one of claims 12 to 15, **characterized in that** it further includes a rotation sensor (52) for the first part relative to the second part.
